# EUROPEAN PATENT APPLICATION

(11) **EP 4 678 373 A1**
(43) Date of publication of application: **14.01.2026**
(21) Application number: 25188565.3
(22) Date of filing: 09.07.2025
(51) Int. Cl.: B29C 45/76

(54) **INJECTION MOLDING MACHINE**

(30) Priority: 10.07.2024 JP 2024111190
(71) Applicant: Toyo Innovex Co., Ltd., Akashi-shi, Hyogo (JP)
(72) Inventor: KASAHARA, Ryuto, Akashi-shi, Hyogo (JP)
(74) Representative: Pintz, György

(57) **Abstract**

An injection molding machine performs a plasticization process causing a screw to move backward during rotation to plasticize a granular resin supplied to a heating cylinder through a hopper in accordance with a plasticization condition, a purging process causing the screw to move forward in the heating cylinder separated from a mold to discharge a molten resin plasticized by the plasticization process, a correction process causing a learned model having learned in advance to correct the plasticization condition so as to bring a waveform data piece close to an ideal state, the waveform data piece indicating a change in a physical quantity obtained during a course of discharging the molten resin by the purging process, and an injection process causing the screw to move forward in the heating cylinder in contact with the mold that is clamped to inject the molten resin plasticized by the plasticization process into a cavity.

## Description

### BACKGROUND OF THE INVENTION

### Field of the Invention

The present invention relates to an injection molding machine that appropriately corrects plasticization conditions.

### Description of the Related Art

For stabilization of the quality of molded articles molded by an injection molding machine, the state of plasticization of the resin in a heating cylinder has to be appropriately managed. For this reason, in order to bring a molten resin close to an ideal state, there is a technique of adjusting a heater temperature to keep the viscosity of the molten resin within a predetermined range (e.g., refer to PTL 1).

PTL 1 refers to JP 2012-035459 A.

### SUMMARY OF THE INVENTION

However, there is a limitation in optimizing the plasticization conditions only by referring to the viscosity of a molten resin, which is an instantaneous value. In addition, there is also a limitation in bringing the state of plasticization of the molten resin close to the ideal state only by raising and lowering the heater temperature so as to keep the resin viscosity within the predetermined range.

In view of such a circumstance, one or more embodiments of the present disclosure provide an injection molding machine that is capable of appropriately correcting plasticization conditions.

An injection molding machine according to the present invention includes: a clamping device configured to open, close, and clamp a mold; an injection device configured to inject a molten resin into a cavity of the mold that is clamped; and a control device configured to control the clamping device and the injection device, wherein the injection device includes a heating cylinder with a distal end configured to move in contact with or separate from the clamped mold, a screw configured to move forward and backward inside the heating cylinder, and a hopper configured to supply a granular resin to the heating cylinder, and the control device performs a plasticization process causing the screw to move backward during rotation to plasticize the granular resin supplied to the heating cylinder through the hopper in accordance with a plasticization condition, a purging process causing the screw to move forward in the heating cylinder separated from the mold to discharge the molten resin plasticized by the plasticization process, a correction process causing a learned model having learned in advance to correct the plasticization condition so as to bring a waveform data piece close to an ideal state, the waveform data piece indicating a change in a physical quantity obtained during a course of discharging the molten resin by the purging process, and an injection process causing the screw to move forward in the heating cylinder in contact with the clamped mold to inject the molten resin plasticized by the plasticization process into the cavity.

The present invention allows appropriate correction of plasticization conditions.

### BRIEF DESCRIPTION OF THE DRAWINGS

FIG. 1 is a side view of an injection molding machine according to an embodiment of the present invention.
FIG. 2 is a hardware block diagram of the injection molding machine.
FIG. 3 is a flowchart of an injection control process.
FIG. 4 is a diagram illustrating an example of a plurality of waveform data pieces.
FIG. 5 is a flowchart of a plasticization condition correction process.
FIG. 6 is a diagram illustrating a neural network provided in a learned model.
FIG. 7 is a diagram illustrating relationship between input data pieces and output data pieces of a learned model to be predicted.
FIG. 8 is a diagram illustrating relationship between the position in a heating cylinder and the number of shots.

### DETAILED DESCRIPTION OF THE INVENTION

A description is given below to an injection molding machine 10 according to the present invention based on the drawings. The injection molding machine 10 is a device that injects a measured molding material into a mold for molding a molded article (hereinafter, referred to as "injection molding").

### Configuration of Injection Molding Machine 10

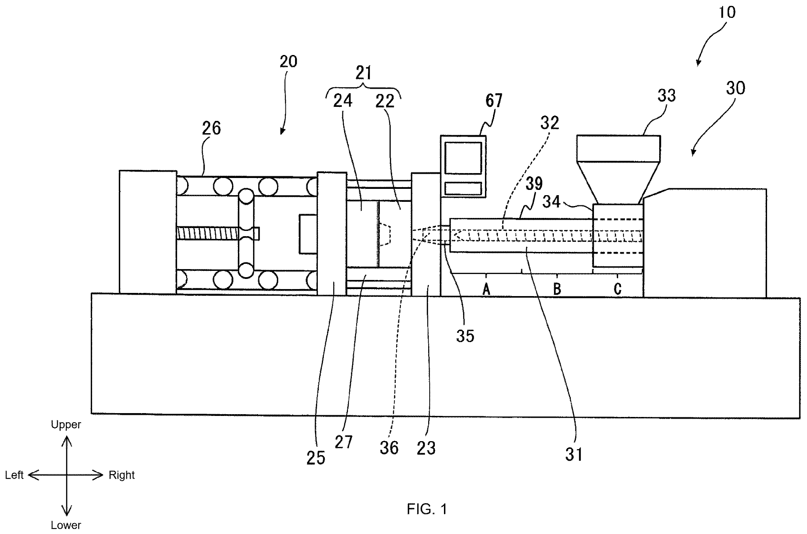

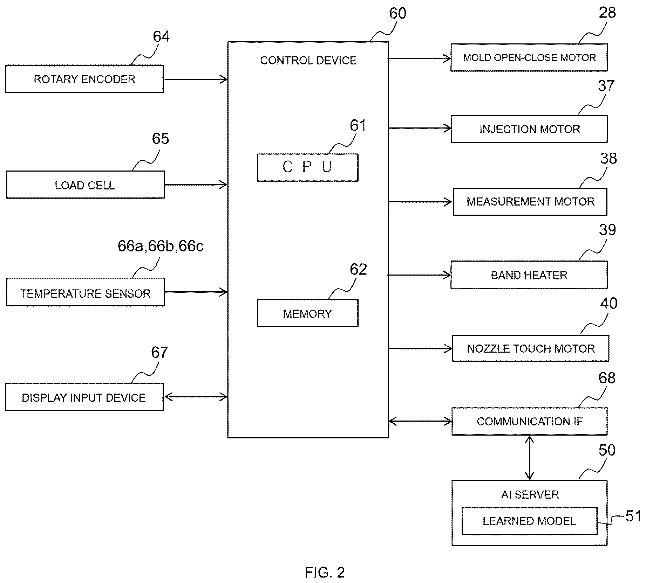

FIG. 1 is a side view of the injection molding machine 10 according to the present embodiment. FIG. 2 is a hardware block diagram of the injection molding machine 10. As illustrated in FIGs. 1 and 2, the injection molding machine 10 is mainly provided with a clamping device 20, an injection device 30, and a control device 60.

The clamping device 20 performs opening and closing and clamping of a mold 21. Specifically, the clamping device 20 is mainly provided with a fixed die plate 23 supporting a fixed-side mold 22 and a movable die plate 25 supporting a movable-side mold 24. The fixed-side mold 22 and the movable-side mold 24 are supported to face each other in a left-right direction (horizontal direction) of the injection molding machine 10.

The movable die plate 25 moves in the left-right direction along a tie bar 27 by transmission of a driving force of a mold open-close motor 28 through a toggle link mechanism 26. When the movable die plate 25 moves in the left direction, the movable-side mold 24 is separated from the fixed-side mold 22. Meanwhile, when the movable die plate 25 moves in the right direction, the movable-side mold 24 abuts on the fixed-side mold 22 to form a cavity (internal space) inside the mold 21. Then, when a pressure is further applied in the direction of moving the movable die plate 25 in the right direction, the fixed-side mold 22 and the movable-side mold 24 are clamped.

The injection device 30 plasticizes and measures a molding material for injection. The injection device 30 according to the present embodiment is arranged facing the clamping device 20 in the horizontal direction (right of the clamping device 20). The injection device 30 is mainly provided with a heating cylinder 31, a screw 32, a hopper 33, and a hopper block 34.

The heating cylinder 31 is a cylindrical member extending in the left-right direction of the injection molding machine 10. The heating cylinder 31 is mainly provided with a resin passage 35 and a nozzle 36. In addition, the heating cylinder 31 has an outer circumferential surface to which a band heater 39 is attached to heat the heating cylinder 31.

The resin passage 35jio is a columnar space extending in the axial direction (longitudinal direction) inside the heating cylinder 31. The resin passage 35 communicates with the outside (cavity of the mold 21) of the heating cylinder 31 through the nozzle 36 provided at a distal end (front end) of the heating cylinder 31. In other words, the resin passage 35 is a space extending from the nozzle 36 along the axial direction.

The screw 32 is a columnar member. The screw 32 has an outer circumferential surface provided with a groove (hereinafter, referred to as a "spiral groove") extending in a spiral shape along the longitudinal direction of the screw 32. The screw 32 is stored in an internal space of the heating cylinder 31 in a state that allows the injection molding machine 10 to move in the left-right direction (hereinafter, referred to as "move forward and backward") and to rotate. In addition, the screw 32 in the heating cylinder 31 is configured in a replaceable manner. In other words, the screw 32 with different specifications (e.g., the material, the shape of the spiral groove, the volume of the spiral groove) is allowed to be inserted into the heating cylinder 31.

The screw 32 moves forward and backward by transmission of a driving force of an injection motor 37 and rotates by transmission of a driving force of a measurement motor 38. More specifically, when the injection motor 37 is normally rotated, the screw 32 moves toward the distal end (i.e., the nozzle 36) of the heating cylinder 31 (moves forward). Meanwhile, when the injection motor 37 is counter-rotated, the screw 32 moves toward the basal end (i.e., opposite side to the nozzle 36) of the heating cylinder 31 (moves backward).

In the description below, within a region that can be reached by the distal end of the screw 32 in the heating cylinder 31, the position closest to the nozzle 36 is referred to as a "forward limit" and the position farthest from the nozzle 36 is referred to as a "backward limit." In addition, the terms "normal rotation" and "counter rotation" of the injection motor 37 do not specify absolute rotation directions and merely specify relative relationship (i.e., normal rotation and counter rotation are rotation in opposite directions).

The hopper 33 is a funnel-shaped member to retain the granular resin as a raw material. The hopper block 34 is a member supporting the heating cylinder 31 and the hopper 33. The hopper 33 communicates with the resin passage 35 on the basal end side, rather than the distal end, of the heating cylinder 31 through the hopper block 34. The granular resin retained in the hopper 33 is supplied to the resin passage 35 of the heating cylinder 31 through an opening provided at a lower end. The granular resin used for the injection molding machine 10 is, for example, so-called "pellets" molded in a columnar shape.

The injection device 30 causes the injection motor 37 to counter-rotate and causes the measurement motor 38 to rotate, thereby causing the screw 32 to move backward while rotating. The pellets supplied through the hopper 33 are thus filled (measured) in the resin passage 35 in front of the screw 32 while being plasticized. In addition, the injection device 30 causes the injection motor 37 to normally rotate, thereby causing the screw 32 to move forward.

In addition, the heating cylinder 31 is capable of moving the nozzle 36 in contact with or separate from the mold 21 that is clamped by transmission of a driving force of a nozzle touch motor 40. When the screw 32 moves forward in a state where the nozzle 36 is in contact with the clamped mold 21 (nozzle touch), the plasticized resin in front of the screw 32 is injected into the cavity of the mold 21 through the nozzle 36. Meanwhile, when the screw 32 moves forward in a state where the nozzle 36 is separated from the mold 21, the plasticized resin in front of the screw 32 is discharged (purged) to the outside through the nozzle 36.

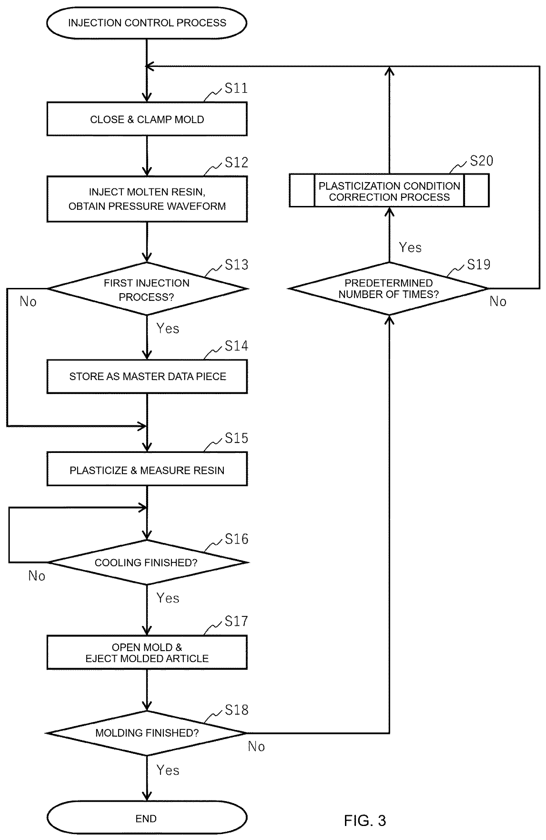

The kind (e.g., degree of plasticizability) of resin to be supplied to the hopper 33 varies in accordance with an intended molded article. In addition, the grain size (size of grains) of the pellets to be supplied to the hopper 33 varies depending on a raw material feeding device, not shown, that supplies the raw material to the hopper 33. Moreover, to the hopper 33, a recycled resin may be supplied in addition to the pellets. The recycled resin refers to unused portions (runners) cut off from molded articles, the resin discharged (purged) from the heating cylinder 31, and the like. The ratio of the pellets and the recycled resin to be supplied to the hopper 33 is gradually changed during the course of an injection control process described later with reference to FIG. 3.

### Configuration of Control Device 60

As illustrated in FIG. 2, the control device 60 is provided with a central processing unit (CPU) 61 and a memory 62. The memory 62 is configured with, for example, a read only memory (ROM), a random access memory (RAM), a hard disk drive (HDD), or a combination of them. The control device 60 achieves processes described later by causing the CPU 61 to read and execute the program codes stored in the ROM or the HDD. The RAM is used as a work area for the CPU 61 to execute the programs.

It should be noted that the specific configuration of the control device 60 is not limited to this and may be achieved by hardware, such as an application specific integrated circuit (ASIC) and a field-programmable gate array (FPGA).

The control device 60 controls the entire operation of the injection molding machine 10. More specifically, the control device 60 controls the mold open-close motor 28, the injection motor 37, the measurement motor 38, the band heater 39, the nozzle touch motor 40, and a communication interface (IF) 68 based on various signals output from a rotary encoder 64, a load cell 65 (pressure sensor), a plurality of temperature sensors 66a, 66b, and 66c, and a display input device 67.

The mold open-close motor 28, the injection motor 37, the measurement motor 38, and the nozzle touch motor 40 are, for example, servomotors to generate a driving force of opening and closing the mold 21, a driving force of moving the screw 32 forward and backward, a driving force of rotating the screw 32, and a driving force of moving the heating cylinder 31 (nozzle 36) in contact with or separate from the mold 21 in accordance with control by a servo amplifier, not shown.

The rotary encoder 64 is a sensor to detect the speed and the distal end position of the screw 32. More specifically, the rotary encoder 64 outputs a pulse signal in accordance with the rotation of the injection motor 37 to the control device 60. Then, the control device 60 specifies the speed of the screw 32 by the number of pulse signals output per unit time. In addition, the control device 60 specifies the distal end position of the screw 32 by the accumulated value of the pulse signals.

The load cell 65 is a sensor to detect a pressure applied to the screw 32. More specifically, the load cell 65 outputs a pressure signal (voltage value), in accordance with the pressure applied to the screw 32, to the control device 60. Then, the control device 60 specifies the pressure applied to the screw 32 based on the pressure signal output from the load cell 65.

The temperature sensors 66a, 66b, and 66c detect the temperatures of respective regions (e.g., distal end region A, middle region B, basal end region C) in the longitudinal direction of the heating cylinder 31 and outputs temperature signals indicating the detected temperatures to the control device 60. That is, the band heater 39 is configured to be capable of individually setting the respective temperatures in the distal end region A, the middle region B, and the basal end region C. The temperature sensors 66a, 66b, and 66c then detect the respective temperatures in the distal end region A, the middle region B, and the basal end region C.

The rotary encoder 64, the load cell 65, and the temperature sensors 66a through 66c are physical quantity sensors to detect physical quantities (e.g., speed, pressure, temperature) during the course of injecting or discharging a molten resin from the heating cylinder 31. Each physical quantity sensor continuously detects changes in such a physical quantity (e.g., changes due to the position of the screw 32, changes in time) during the course of injecting or discharging the molten resin from the heating cylinder 31 and outputs a physical quantity signal indicating the detected physical quantities to the control device 60. It should be noted that specific examples of the physical quantity detectable by the physical quantity sensor are not limited to the examples described earlier and may be changes in the viscosity of the molten resin, changes in the density of the molten resin, and the like.

The display input device 67 is a user interface provided with a display (display device) to display various kinds of information to be notified to an operator and buttons, switches, dials, and the like (input devices) to accept input operations by an operator. The display input device 67 may be provided with a touchscreen superimposed on the display. The display input device 67 accepts an input operation by an operator and outputs an input signal corresponding to the accepted input operation to the control device 60.

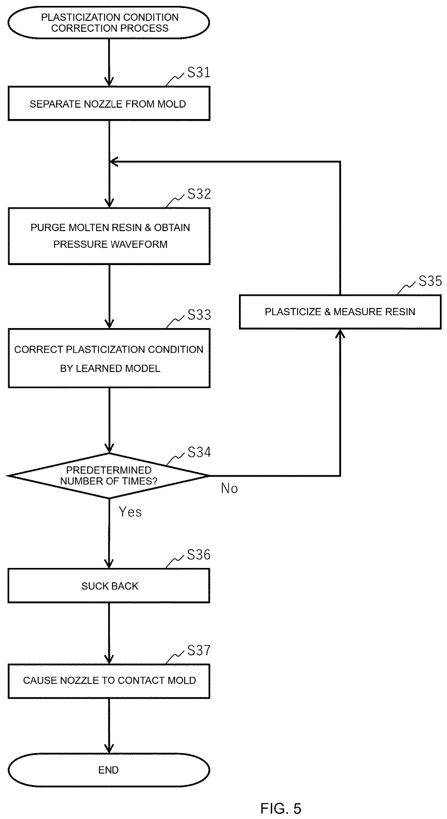

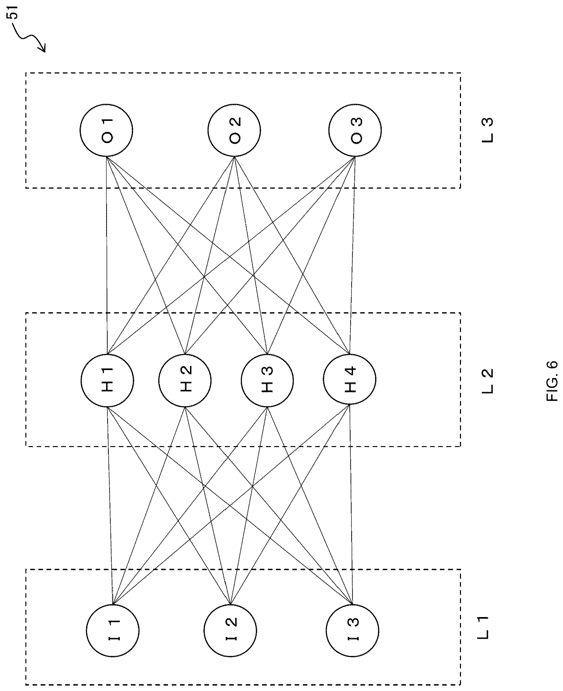

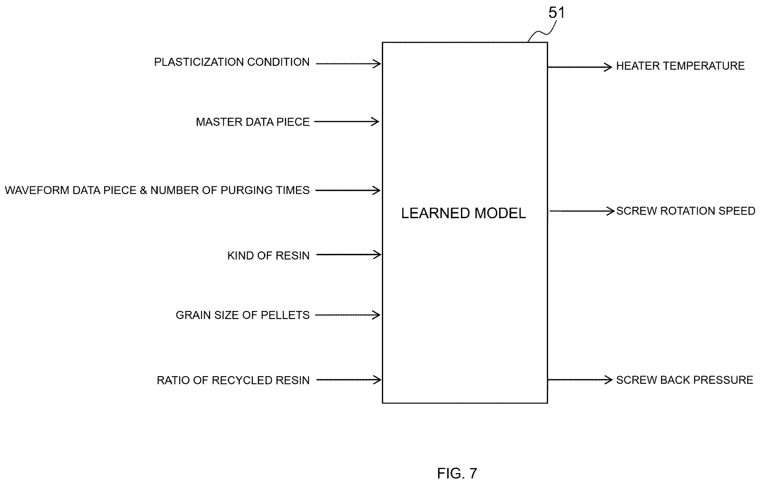

The communication IF 68 is an interface to communicate with an Al server 50 through a communication network. The communication network is configured with, for example, the Internet, a public network, a wired LAN, a wireless LAN, or a combination of them. The control device 60 is capable of instructing the Al server 50 through the communication IF 68 on the process at step S33 in FIG. 5 and receiving the result of the process performed by the Al server 50 through the communication IF 68. Details of the Al server 50 are described later with reference to FIGs. 6 and 7. It should be noted that the functions of the Al server 50 may be implemented in the control device 60.

In addition, the control device 60 may communicate with the raw material feeding device through the communication IF 68. More specifically, the control device 60 may receive the kind of resin supplied to the hopper 33, the grain size of the pellets supplied to the hopper 33, and the ratio of the recycled resin supplied to the hopper 33 from the raw material feeding device through the communication IF 68. As another example, the control device 60 may accept input operations by an operator that inputs the kind of resin to be supplied to the hopper 33, the grain size of the pellets to be supplied to the hopper 33, and the ratio of the recycled resin to be supplied to the hopper 33 through the display input device 67.

### Information Set to Memory 62

The memory 62 stores molding conditions for injection molding. The molding conditions are conditions for operating the injection molding machine 10 that forms molded articles. In the injection control process in FIG. 3, the control device 60 causes the injection molding machine 10 to operate in accordance with the molding conditions stored in the memory 62. The molding conditions according to the present embodiment include a plurality of parameters (e.g., mold open-close speed, cooling time, ejection time, injection speed, injection stroke, heater temperature, screw rotation speed, screw back pressure). It should be noted that parameters included in the molding conditions are not limited to them.

The parameter "mold open-close speed" indicates the speed (mm/s) of switching the mold 21 from one of a mold open state and a mold close and clamped state to the other. The parameter "cooling time" indicates a standby time (sec) until opening the mold 21 after injecting the molten resin into the mold 21. The molten resin injected into the cavity of the mold 21 is hardened during this cooling time to be a molded article. The parameter "ejection time" indicates the time (sec) for ejecting the molded article from the opened mold 21 by a robot arm, not shown.

The parameter "injection speed" indicates the speed (mm/s) of moving the screw 32 forward in the injection process. The parameter "injection stroke" indicates the distance (mm) of moving the screw 32 forward in the injection process. The parameter "heater temperature" indicates the temperature (°C) of the band heater 39 to heat the heating cylinder 31. The parameter "screw rotation speed" indicates the rotation speed (rpm) of the screw 32 in the plasticization process. The parameter "screw back pressure" indicates the pressure (MPa) applied to the screw 32 moving backward during rotation in the plasticization process.

It should be noted that, among the above molding conditions, the parameters "heater temperature", "screw rotation speed", and "screw back pressure" are examples of the "plasticization conditions" for plasticizing the resin by the plasticization process. That is, the plasticization conditions are part of the molding conditions. The plasticization conditions are parameters exerting influence on the state of plasticization of the resin (pellets, recycled resin) supplied through the hopper 33. For example, a higher "heater temperature" parameter causes the resin to be more likely to be melted, a lower "screw rotation speed" parameter causes the resin to be more likely to be melted, and a higher "back pressure" parameter causes the resin to be more likely to be melted. It should be noted that specific parameters included in the plasticization conditions are not limited to the examples described above.

### Injection Control Process

FIG. 3 is a flowchart of the injection control process. The injection control process is a process of injecting the molten resin filled in the heating cylinder 31 into the cavity of the clamped mold 21 to form molded articles. The control device 60 starts the injection control process in response to, for example, an input of a molding instruction through the display input device 67. The molding instruction includes, for example, the number of molded articles to be molded (hereinafter, referred to as the "number of moldings").

It should be noted that, at the point of starting the injection control process, it is assumed that the mold 21 is opened, that the nozzle 36 is in contact with the mold 21, that the molten resin to be injected next is measured in the space, in front of the screw 32, of the heating cylinder 31, and that the spiral groove of the screw 32 on the distal end side from the hopper 33 is filled with the resin (pellets, semi-molten resin, molten resin).

In addition, before the injection control process is started, it is assumed that test molding of molded articles is carried out to determine molding conditions, that the molding conditions (plasticization conditions) suitable for molded articles to be molded with the mold 21 are determined, and that the molding conditions are input through the display input device 67 and are stored in the memory 62.

At first, the control device 60 causes the mold open-close motor 28 to rotate in accordance with the molding condition "mold open-close speed" to close and clamp the mold 21 (S11). Thus, a cavity is formed in the mold 21. The process at step S11 is an example of a clamping process.

Then, after the clamping process (S11) is finished, the control device 60 causes the injection motor 37 to normally rotate in accordance with the molding conditions "injection speed" and "injection stroke" to move the screw 32 forward (S12). This causes the molten resin measured in the region, in front of the screw 32, in the heating cylinder 31 to be injected into the cavity of the mold 21. The process at step S12 is an example of the injection process.

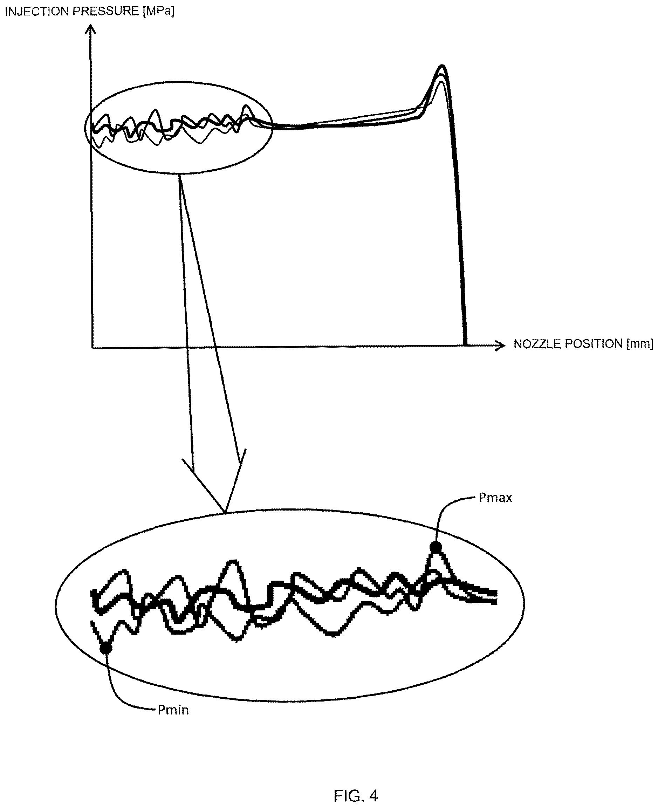

In addition, while performing the injection process (S12), the control device 60 obtains a waveform data piece indicating changes in the pressure detected by the load cell 65. More specifically, as illustrated in FIG. 4 for example, the control device 60 obtains a waveform data piece indicating changes in the pressure (ordinate) corresponding to the position of the nozzle 36 (abscissa) in the heating cylinder 31. Such a waveform data piece is characterized by, for example, reaching a peak immediately after the screw 32 starts moving forward, and then being stabilized, followed by oscillation near the forward limit. The control device 60 then causes the waveform data piece thus obtained to be stored in the memory 62.

Moreover, if this injection process is performed for the first time after performing a plasticization condition correction process (S20) described later (S13: Yes), the control device 60 causes the waveform data piece obtained at step S12 to be stored in the memory 62 as a master data piece (S14). Meanwhile, if this injection process is not performed for the first time after performing the plasticization condition correction process (S20) described later (S13: No), the control device 60 skips the process at step S14.

The waveform data piece stored as the master data piece is a data piece indicating changes in a physical quantity immediately after the plasticization conditions are corrected by the plasticization condition correction process (S20). That is, the waveform data piece to be stored as the master data piece is a data piece indicating changes in a physical quantity when the state of plasticization of the molten resin is close to an ideal state.

Then, after the injection process (S12) is finished, the control device 60 causes the screw 32 to move backward during rotation to plasticize the granular resin supplied to the heating cylinder 31 through the hopper 33 and to measure the molten resin to be injected next into the space, in front of the screw 32, of the heating cylinder 31 (S15). The process at step S15 is an example of the plasticization process.

In addition, after the injection process (S12) is finished, in parallel with the plasticization process (S15), the control device 60 causes the molten resin in the cavity to be cooled in accordance with the molding condition "cooling time" (S16). This causes the molten resin to be cooled in the mold 21 and to be molded into a molded article. In this situation, the control device 60 may cause cooling water to be circulated in a cooling water channel provided in the mold 21. The process at step S16 is an example of a cooling process.

Then, in response to the finish of both the plasticization process (S15) and the cooling process (S16) (S16: Yes), the control device 60 causes the mold open-close motor 28 to rotate in accordance with the molding condition "mold open-close speed" to open the mold 21 and to cause the robot arm to eject the molded article from the opened mold 21 in accordance with the molding condition "ejection time" (S17). The process at step S17 is an example of an ejection process.

The control device 60 then determines whether the number of molded articles formed by the injection control process reaches the number of moldings indicated by the molding instruction (S18). Then, if the number of molded articles thus formed does not reach the number of moldings (S18: No), the control device 60 performs the processes at steps S19 through S20 and then again performs the processes at steps S11 and later. That is, the control device 60 repeatedly performs the processes at steps S11 through S17 and S19 through S20 until the number of molded articles thus formed reaches the number of moldings.

As an example, until performing the injection process (S12) the number of times defined in advance (predetermined number of times) (S19: No), the control device 60 skips the process at step S20 and repeatedly performs the processes at steps S11 through S17. Then, if the injection process (S12) is performed the predetermined number of times (S19: Yes), the control device 60 performs the plasticization condition correction process (S20) and performs the processes at steps S11 and later in accordance with the plasticization conditions corrected by the plasticization condition correction process. Details of the plasticization condition correction process are described later with reference to FIG. 5.

As another example, if the variation in the waveform data pieces obtained by the repeatedly performed injection processes (S12) is a threshold or more (S19: Yes), the control device 60 may perform the plasticization condition correction process (S20). FIG. 4 is a diagram illustrating an example of the plurality of waveform data pieces. It should be noted that, in FIG. 4, the plurality of waveform data pieces are distinguished by the thickness of each line.

During the course of repeatedly performing the processes at steps S11 through S17, replacement of the lot of the pellets charged into the raw material feeding device has a possibility of changing the grain size and the shape of the pellets. In some cases, to the hopper 33, a recycled resin may be supplied in addition to the pellets. Then, the ratio of the pellets and the recycled resin supplied to the hopper 33 is gradually changed during the course of the injection control process. As a result, the plasticization processes (S15) repeatedly performed under the identical plasticization conditions cause a gradual change in the state of plasticization of the molten resin. As a result, as illustrated in FIG. 4, a variation occurs in the waveform data pieces obtained by the repeatedly performed injection processes (S12).

For this reason, as illustrated in the enlarged view in FIG. 4 for example, if the difference between the maximum value Pmax of the pressure and the minimum value Pmin of the pressure is a threshold or more in the latter half portion (near the forward limit) of the plurality of waveform data pieces (S19: Yes), the control device 60 may perform the plasticization condition correction process (S20). As another example, if the area (integral value) of the region surrounded by the latter half portion (near the forward limit) of the plurality of waveform data pieces illustrated in the enlarged view in FIG. 4 is a threshold or more (S19: Yes), the control device 60 may perform the plasticization condition correction process (S20). The latter half portion of the waveform data pieces refers to, for example, a section on the forward limit side from a position defined in advance of the nozzle 36.

Further, if the number of molded articles thus formed reaches the number of moldings (S18: Yes), the control device 60 finishes the injection control process. As another example, if accepting an operation by an operator instructing finish of the injection control process through the display input device 67 (S18: Yes), the control device 60 may finish the injection control process.

### Plasticization Condition Correction Process

FIG. 5 is a flowchart of the plasticization condition correction process. The plasticization condition correction process is a process of correcting the plasticization conditions so as to bring the waveform data piece obtained by the purging process close to the ideal state. The phrase "to bring the waveform data piece close to the ideal state" refers to, for example, when the molten resin plasticized in accordance with the plasticization conditions after correction is injected into the mold 21, to bring the waveform data piece close to a desired state (a state where the resin in the heating cylinder 31 is uniformly plasticized).

As an example, the plasticization condition correction process is a process of causing a learned model 51 to correct the plasticization conditions so as to bring each waveform data piece obtained by the repeatedly performed purging process (S32) close to the master data piece. As another example, it is a process of causing the learned model 51 to correct the plasticization conditions so as to reduce the variation in the plurality of waveform data pieces obtained by the repeatedly performed purging processes (S32).

At first, the control device 60 drives the nozzle touch motor 40 to cause the nozzle 36 to separate from the mold 21 (S31). The control device 60 then causes the injection motor 37 to normally rotate to cause the screw 32 to move forward (S32). This causes the molten resin measured in the region, in front of the screw 32, in the heating cylinder 31 to be discharged (purged) to the outside of the injection molding machine 10 through the nozzle 36 separated from the mold 21. The process at step S32 is an example of the purging process.

It should be noted that all or part of the conditions (e.g., injection speed, injection stroke) for operating the purging process (S32) may be identical to the injection process (S12). That is, the control device 60 may perform the purging process in accordance with at least part of the molding conditions. As another example, the control device 60 may perform the purging process in accordance with conditions (purge conditions) different from the molding conditions. It is assumed that the purge conditions in this case are input through the display input device 67 and stored in the memory 62.

In addition, while performing the purging process (S32), the control device 60 obtains a waveform data piece indicating changes in the pressure detected by the load cell 65. The control device 60 then causes the waveform data piece thus obtained to be stored in the memory 62. The waveform data piece obtained by the purging process has a basic shape (i.e., changes in the pressure corresponding to the position of the nozzle 36) in common with the waveform data piece obtained by the injection process. Meanwhile, in the purging process, the molten resin discharged from the nozzle 36 is not influenced by the internal shape of the mold 21 (more specifically, the shape of the cavity). Thus, the waveform data piece obtained by the purging process sometimes has a different absolute value of the pressure or has a different mode of oscillation in the latter half portion compared with the waveform data piece obtained by the injection process.

Then, the control device 60 causes the learned model 51 to correct the plasticization conditions so as to bring the waveform data piece obtained by the purging process (S32) close to the ideal state (S33). That is, the control device 60 inputs the current plasticization conditions to the learned model 51 and obtains the plasticization conditions after correction from the learned model 51. The process at step S33 is an example of the correction process. The specific details of the correction process are described later with reference to FIGs. 6 through 9.

The control device 60 then determines whether the purging process (S32) and the correction process (S33) are performed a predetermined number of times (S34). Then, if determining that the number of times performing the purging process and the correction process is less than the predetermined number of times (S34: No), the control device 60 causes the screw 32 to move backward during rotation to plasticize the granular resin supplied to the heating cylinder 31 through the hopper 33 and to measure the molten resin (S35). The process at step S35 is an example of the plasticization process, which is in common with step S15. That is, the control device 60 repeatedly performs the processes at steps S32 through S35 the predetermined number of times.

The predetermined number of times may be set as, for example, the number of times performing step S32 (i.e., the number of shots) required for the granular resin from entering the heating cylinder 31 until being discharged. It should be noted that the specific value as the predetermined number of times is not limited to the number of shots. In addition, the predetermined number of times is not limited to a fixed value. That is, the control device 60 may repeatedly perform the processes at steps S32 through S35 until the plasticization conditions can be evaluated to be close to the ideal state.

Then, if determining that the number of times performing steps S32 through S35 reaches the predetermined number of times (S34: Yes), the control device 60 drives the injection motor 37 to cause the screw 32 to repeatedly move forward and backward (suck back) (S36). The suck back is a process of repeating forward movement and backward movement of the screw 32 to discharge the molten resin in the heating cylinder 31. Further, after the suck back is finished, the control device 60 drives the nozzle touch motor 40 to cause the nozzle 36 to be in contact with the mold 21 (S37).

### Process of Al Server 50

FIG. 6 is a diagram illustrating a neural network provided in the learned model 51. FIG. 7 is a diagram illustrating relationship between input data pieces and output data pieces of the learned model 51 to be predicted.

The Al server 50 is achieved by, for example, a general-purpose computer, such as a work station and a personal computer. The Al server 50 achieves artificial intelligence (AI) including the learned model 51. The Al on the Al server 50 processes the input data pieces and outputs the output data pieces. The Al on the Al server 50 also outputs the output data pieces from the input data pieces using, for example, a neural network illustrated in FIG. 6. The Al server 50 according to the present embodiment includes the learned model 51 performing, for example, the correction process (S33).

As illustrated in FIG. 6, the neural network is configured with an input layer L1 composed of a plurality of nodes I1, I2, and I3, an intermediate layer L2 composed of a plurality of nodes H1, H2, H3, and H4, and an output layer L3 composed of a plurality of nodes O1, O2, and O3. It should be noted that, although the number of nodes in the input layer L1 coincides with that in the output layer L3 in the example of FIG. 6, the number of nodes in the input layer L1 may be different from that in the output layer L3. In addition, the neural network may have a plurality of intermediate layers L2. Still in addition, although FIG. 6 illustrates a fully connected neural network where the plurality of nodes composing the respective layers L1, L2, and L3 are connected to all the nodes in the adjacent layers, the structure of the neural network is not limited to this.

The learned model 51 is generated by inputting a plurality of learning data pieces including an input data piece and a correct data piece to a model before learning (hereinafter, referred to as a "pre-learning model"). Such an input data piece refers to a data piece input to the pre-learning model. Such a correct data piece refers to a data piece to be output when an input data piece is input. Then, the plurality of learning data pieces are input to the pre-learning model, thereby causing the neural network to be optimized and thus to become the learned model 51. The learning data pieces are generated based on, for example, experiments, simulations, or results of performing injection molding by the injection molding machine 10. This process is an example of a learning process that adjusts a weighting factor and a bias of each node so as to cause a correct data piece to be output from the output layer L3 when an input data piece is input to the input layer L1.

For example, the learned model 51 is generated by inputting learning data pieces to the pre-learning model, where the learning data pieces include the waveform data pieces as the input data pieces and the plasticization conditions (e.g., all or part of the heater temperature, the screw rotation speed, and the screw back pressure) as the correct data pieces, the plasticization conditions bringing this waveform data piece (more specifically, the state of plasticization specified from the waveform data piece) close to the ideal state. The input data pieces may further include all or part of the plasticization conditions, the master data piece, the kind of resin, the grain size of the pellets, and the ratio of the recycled resin.

The learning process may also be performed on the learned model 51 not only on the pre-learning model. In addition, the Al does not have to learn using the input data pieces and the correct data pieces actually used in the present invention and may learn from learning data pieces for general purpose use. Still in addition, the learning process performed by the Al is not limited to "supervised learning" where the input data pieces and the correct data pieces are input, and may be "unsupervised learning" the correct data pieces are not input or may be reinforcement learning, transfer learning, and the like.

The Al server 50 also causes an output data piece to be generated and output by inputting an input data piece to the neural network of the learned model 51. This process is an example of a generation process that processes the input data pieces input to the input layer L1 using a weighting factor and a bias adjusted in advance for each node, thereby outputting output data pieces from the output layer L3.

At step S33 for example, the control device 60 inputs the plasticization conditions stored in the memory 62 and the waveform data piece obtained at step S32 as the input data pieces, and thus causes the plasticization conditions that are corrected so as to bring the waveform data piece close to the ideal state to be output as the output data piece. The control device 60 then overwrites the plasticization conditions stored in the memory 62 with the plasticization conditions after correction obtained from the learned model 51.

As an example, in the repeatedly performed correction process (S33), the control device 60 may cause the learned model 51 to correct the plasticization conditions so as to bring the waveform data piece obtained by the latest purging process (S32) close to the master data piece. More specifically, in the repeatedly performed correction process (S33), the control device 60 inputs the plasticization conditions and the master data piece stored in the memory 62 and the waveform data piece obtained by the latest purging process (S32) as the input data pieces and causes the plasticization conditions that are corrected so as to bring the waveform data piece close to the master data piece to be output as the output data pieces.

As another example, in the repeatedly performed correction process (S33), the control device 60 may cause the learned model 51 to correct the plasticization conditions so as to reduce the variation in the waveform data pieces obtained by the plurality of purging processes (S32). More specifically, in the Nth (N is an integer of 2 or more) correction process (S33), the control device 60 inputs the plasticization conditions stored in the memory 62 and the waveform data pieces obtained by the first through (N - 1)th purging processes (S32) as the input data pieces and causes the plasticization conditions that are corrected so as to reduce the variation in the (N - 1) waveform data pieces to be output as the output data pieces.

It should be noted that the input data pieces to be input to the learned model 51 are not limited to the examples described earlier. In the correction process (S33), for example, the control device 60 may further input at least one of the kind of resin supplied to the hopper 33, the grain size of the granular resin supplied to the hopper 33, and the ratio of the recycled resin supplied to the hopper 33 as the input data piece to the learned model 51.

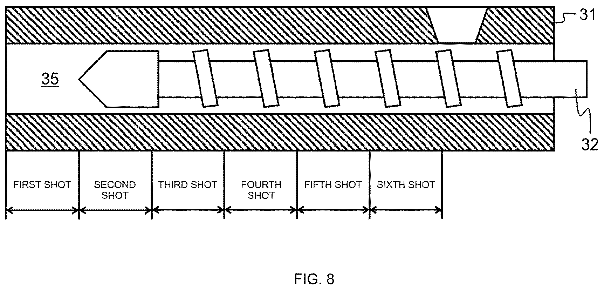

FIG. 8 is a diagram illustrating relationship between the position in the heating cylinder 31 and the number of shots. As illustrated in FIG. 8, the heating cylinder 31 is filled with the resin for a plurality of shots (6 shots in the example of FIG. 8). Then, in the first purging process (S32), the measured resin for the first shot is purged in the region in front of the screw 32. In addition, in the plasticization process (S35) performed in accordance with the plasticization conditions corrected at step S33, the resin for the second through sixth shots moves forward and the resin is newly supplied from the hopper 33. Still in addition, when the processes at steps S32 through S35 are repeatedly performed, the resin for each shot is purged in order.

In this situation, for example, the resin for the second shot is purged after the correction process (S33) is performed once. Meanwhile, the resin for the sixth shot is purged after the correction process (S33) is performed five times. Thus, the resin for the second shot is less influenced by the plasticization conditions corrected by the correction process compared with the resin for the sixth shot. Accordingly, if the plasticization conditions are largely corrected based on the waveform data piece obtained by the purging process of the resin for the second shot, there is a possibility of moving away from the ideal state instead.

For this reason, the control device 60 may further input information (the number of times of purging) indicating what number of times of the purging process the waveform data piece has been obtained as the input data piece to the learned model 51. Then, in the repeatedly performed correction processes, the learned model 51 may reduce the amount of correction of the plasticization conditions when the number of times of purging is a smaller value, and may increase the amount of correction of the plasticization conditions when the number of times of purging is a larger value.

### Actions and Effects of Embodiments

According to the above embodiments, the plasticization conditions are corrected so as to bring the waveform data piece obtained by the purging process close to the ideal state. In this situation, the plasticization conditions are corrected using the two dimensional value indicating the changes in a physical quantity instead of an instantaneous value (one dimensional value), such as the viscosity of the molten resin, thereby allowing the waveform data piece (i.e., state of plasticization) to be brought closer to the ideal state.

In addition, the plasticization conditions are corrected using the waveform data piece obtained while the nozzle 36 is separated from the mold 21 (i.e., by the purging process) not using a waveform data piece obtained while the nozzle 36 is in contact with the mold 21 (i.e., by the injection process), thereby allowing the waveform data piece (i.e., state of plasticization) to be brought closer to the ideal state without depending on the shape of the mold 21 (cavity).

Still in addition, in order to bring the waveform data piece close to the ideal state, how to correct the plurality of parameters (e.g., the heater temperature, the screw rotation speed, and the screw back pressure) included in the plasticization conditions is very complex. For this reason, the learned model 51 having learned in advance is caused to correct the plasticization conditions to allow optimization of the plasticization conditions in which the plurality of parameters complexly exert influence on each other.

Yet in addition, in the above embodiments, the waveform data piece immediately after performing the correction process can be evaluated as close to the ideal state and thus is stored as the master data piece and then the plasticization conditions are corrected so as to bring the waveform data piece close to this master data piece by the next correction process, thereby allowing the state of plasticization to be brought close to the ideal state.

Yet in addition, the variation in the waveform data pieces indicates that the resin is not uniformly plasticized in the heating cylinder 31. Because of this, the plasticization conditions are corrected so as to reduce the variation in the plurality of waveform data pieces obtained by the repeatedly performed purging processes as in the above embodiments, thereby allowing the state of plasticization of the molten resin to be brought close to the ideal state.

Yet in addition, the purging process and the correction process have to be performed by temporarily pausing injection molding, thus causing downtime of the injection molding machine 10. For this reason, the purging process and the correction process are performed with the timing when the variation in the waveform data pieces obtained by the injection processes increases as in the above embodiments, thereby allowing both maintenance of the ideal state of plasticization and prevention of decrease in the throughput of the injection molding machine 10.

Yet in addition, changes in the state of plasticization occur due to changes in, for example, the timing of switching the lot of the pellets charged into the raw material feeding device and the ratio of the pellets and the recycled resin supplied to the hopper 33. For this reason, the timing of performing the purging process and the correction process is determined by the number of shots (the number of times performing the injection process) as in the above embodiments, thereby allowing data processing load for evaluating the variation in the waveform data pieces to be reduced.

Yet in addition, reduction in the kinds of input data piece allows the learned model 51 to be simple, and increase in the kinds of input data piece allows the state of plasticization to be brought even closer to the ideal state. Thus, as in the above embodiments, it is possible to balance them by defining the waveform data piece obtained by the purging process and the newest plasticization conditions as essential input data pieces and defining at least one of the kind of resin supplied to the hopper 33, the grain size of the granular resin supplied to the hopper 33, and the ratio of the recycled resin supplied to the hopper 33 as an optional input data piece.

Yet in addition, there is a close relationship (e.g., positive correlation, direct proportion) between the pressure applied to the screw 32 moving forward and the state of plasticization of the resin in the heating cylinder 31. Thus, as in the above embodiments, it is possible to bring the state of plasticization even closer to the ideal state by correcting the plasticization conditions based on the waveform data pieces of the changes in the pressure.

The embodiments described above are merely explanatory examples of the present invention and are not intended to limit the scope of the present invention only to those embodiments. Those skilled in the art are capable of carrying out the present invention in various other modes without departing from the spirit of the present invention.

## Claims

1. An injection molding machine, comprising:
a clamping device configured to open, close, and clamp a mold;
an injection device configured to inject a molten resin into a cavity of the mold that is clamped; and
a control device configured to control the clamping device and the injection device, wherein
the injection device includes
a heating cylinder with a distal end configured to move in contact with or separate from the clamped mold,
a screw configured to move forward and backward inside the heating cylinder, and
a hopper configured to supply a granular resin to the heating cylinder, and the control device performs
a plasticization process causing the screw to move backward during rotation to plasticize the granular resin supplied to the heating cylinder through the hopper in accordance with a plasticization condition,
a purging process causing the screw to move forward in the heating cylinder separated from the mold to discharge the molten resin plasticized by the plasticization process,
a correction process causing a learned model having learned in advance to correct the plasticization condition so as to bring a waveform data piece close to an ideal state, the waveform data piece indicating a change in a physical quantity obtained during a course of discharging the molten resin by the purging process, and
an injection process causing the screw to move forward in the heating cylinder in contact with the clamped mold to inject the molten resin plasticized by the plasticization process into the cavity.

2. The injection molding machine according to Claim 1, wherein the control device
stores the waveform data piece obtained by the first injection process after performing the correction process as a master data piece,
repeatedly performs the correction process, the plasticization process in accordance with the plasticization condition corrected by the correction process, and the purging process, and,
in the correction process repeatedly performed, causes the learned model to correct the plasticization condition so as to bring the waveform data piece obtained by the latest purging process close to the master data piece.

3. The injection molding machine according to Claim 1, wherein the control device
repeatedly performs the correction process, the plasticization process in accordance with the plasticization condition corrected by the correction process, and the purging process, and,
in the correction process repeatedly performed, causes the learned model to correct the plasticization condition so as to reduce a variation in the waveform data pieces obtained by a plurality of the purging processes.

4. The injection molding machine according to Claim 1, wherein the control device performs the purging process and the correction process if a variation in the waveform data pieces obtained by the injection process repeatedly performed is a threshold or more.

5. The injection molding machine according to Claim 1, wherein the control device performs the purging process and the correction process if the injection process is performed a number of times defined in advance.

6. The injection molding machine according to Claim 1, wherein, in the correction process, the control device
inputs the waveform data piece obtained by the purging process and the newest plasticization condition to the learned model as input data pieces and
obtains the plasticization condition after correction from the learned model as an output data piece.

7. The injection molding machine according to Claim 6, wherein, in the correction process, the control device further inputs at least one of a kind of resin supplied to the hopper, a grain size of the granular resin supplied to the hopper, and a ratio of a recycled resin supplied to the hopper to the learned model as the input data piece.

8. The injection molding machine according to Claim 1, wherein, in the purging process, the control device obtains the waveform data piece indicating a change in a pressure applied to the screw moving forward.
